# EUROPÄISCHE PATENTSCHRIFT

(11) **EP 3 261 903 B1**
(45) Veröffentlichungstag und Bekanntmachung des Hinweises auf die Patenterteilung: **13.01.2021**
(21) Anmeldenummer: 16705957.5
(22) Anmeldetag: 24.02.2016
(51) Int. Cl.: B62D 15/02, B60W 30/06, G06K 9/00, B60W 50/14

(54) **PARKASSISTENZSYSTEM MIT ERKENNUNG EINER UNIVERSALPARKLÜCKE**
PARKING ASSISTANCE SYSTEM WITH RECOGNITION OF UNIVERSAL PARKING SLOT
ASSISTANCE PARKING AVEC RECONNAISSANCE D'AIRE DE STATIONNEMENT

(30) Priorität: 28.02.2015 DE 102015203619
(43) Veröffentlichungstag der Anmeldung: 03.01.2018
(73) Patentinhaber: Bayerische Motoren Werke Aktiengesellschaft, 80809 München (DE)
(72) Erfinder: AHRENS, Dirk, 80804 München (DE); FREISTADT, Alois, 85764 Oberschleissheim (DE); SCHMIDT, Joachim, 80796 München (DE)
(86) Internationale Anmeldenummer: PCT/EP2016/053803
(87) Internationale Veröffentlichungsnummer: WO 2016/135161

(56) Entgegenhaltungen:
- EP-A2- 1 862 376
- WO-A1-2008/055567
- DE-A1-102009 029 553
- DE-A1-102009 047 283
- DE-A1-102011 122 616

## Beschreibung

Die Erfindung betrifft ein Parkassistenzsystem zum Durchführen eines automatisierten Einparkmanövers in eine Parklücke mit zumindest automatischer Querführung für Kraftfahrzeuge, insbesondere für Personenkraftwagen.

Derartige Parkassistenzsysteme vermessen vor Durchführung des Einparkmanövers eine Parklücke und berechnen basierend hierauf eine Einparktrajektorie zum Einparken in die Parklücke. Ein gattungsgemäßes Parkassistenzsystem ist aus DE 10 2011 122616 A1 bekannt.

Bei Parkassistenzsystemen mit automatisierter Querführung wird während des Einparkvorgangs die Lenkung des Kraftfahrzeugs während des Einparkvorgangs vom System übernommen. Die Längsführung muss der Fahrer durch entsprechendes Beschleunigen und Bremsen selbst übernehmen. Bei Parkassistenzsystemen mit automatisierter Querführung und automatisierter Längsführung wird auch die Aufgabe der Längsführung je nach Automatisierungsgrad der Längsführung teilweise oder vollständig vom Parkassistenzsystem übernommen. Es können beispielsweise die Lenkung, die Bremse, der Fahrzeugantrieb und die Fahrtrichtung (Vorwärts- oder Rückwärtsfahrt) vom Parkassistenzsystem gesteuert werden. Bei derartigen Parkassistenzsystemen hat der Fahrer beispielsweise die Möglichkeit, per Betätigung eines Bedienelements, beispielsweise einer Taste, das Fahrzeug selbständig einparken und optional ausparken lassen zu können.

Derartige Parkassistenzsysteme unterstützen typischerweise das rückwärtige Einparken längs zur Fahrbahn in eine parallel zu Fahrbahn gelegene Längsparklücke, wobei das Fahrzeug rückwärts mit automatisierter Querführung und gegebenenfalls automatisierter Längsführung in einem oder mehreren Zügen entlang einer berechneten Parktrajektorie in die Längsparklücke einparkt.

Neuere Parkassistenzsystem unterstützen teilweise auch zusätzlich das rückwärtige Einparken in eine Querparklücke quer zur Fahrbahn, wobei das Fahrzeug rückwärts mit automatischer Querführung und gegebenenfalls automatischer Längsführung in einem oder mehreren Zügen entlang einer berechneten Parktrajektorie in die Querparklücke einparkt. Unter Querparklücken können auch sogenannte Schrägparklücken verstanden werden, die nicht orthogonal zur Fahrbahn ausgerichtet sind.

Bei Parkassistenzsystemen die sowohl das Einparken in Längsparklücken als auch das Einparken in Querparklücken unterstützen, gibt es verschiedene Konzepte. Bei einer ersten Gruppe von Systemen muss der Fahrer im Vorfeld vor der automatischen Parkplatzsuche per Bedienelement vorwählen, ob der Fahrer nun eine Längsparklücke oder eine Querparklücke beparken will. Daraufhin werden dem Fahrer auf einen Bildschirm im Fahrzeugcockpit nur Längsparklücken bzw. Querparklücken angezeigt, die dann längs bzw. quer beparkt werden können. Bei einer anderen Gruppe von Systemen muss der Fahrer vor der Parkplatzsuche keine Vorauswahl treffen. Derartige Systeme zeigen dem Fahrer detektierte Längsparklücken und Querparklücken an und können automatisch feststellen, ob es sich bei einer detektierten Parklücke um eine Längsparklücke oder um eine Querparklücke handelt.

Bei großen Parklücken, die allein unter Betrachtung der Parklückengeometrie sowohl eine Längsparklücke als auch eine Querparklücke sein könnten (d. h. in Fahrbahnrichtung lang genug für eine Längsparklücke und quer zur Fahrbahn tief genug für eine Querparklücke), z. B. eine doppelte oder dreifache Querparklücke, kann es sein, dass das Parkassistenzsystem entgegen des Fahrerwunsches längs oder quer in Parklücke einparkt, obwohl der Fahrer quer bzw. längs in die Parklücke einparken möchte. Der Fahrer kann beispielsweise aufgrund der parkenden Fahrzeuge oder eines Schilderhinweises im Unterschied zum Parkassistenzsystem eindeutig erkennen, dass quer bzw. längs in die Parklücke einzuparken ist.

Es ist daher Aufgabe der Erfindung, ein verbessertes Parkassistenzsystem mit automatischer Erkennung des Parklückentyps anzugeben, bei dem die vorstehend beschriebene Problematik bei derartigen großen Parklücken vermieden wird.

Die Aufgabe wird durch die Merkmale der unabhängigen Patentansprüche gelöst. Vorteilhafte Ausführungsformen sind in den abhängigen Ansprüchen beschrieben. Es wird darauf hingewiesen, dass zusätzliche Merkmale eines von einem unabhängigen Patentanspruch abhängigen Patentanspruchs ohne die Merkmale des unabhängigen Patentanspruchs oder nur in Kombination mit einer Teilmenge der Merkmale des unabhängigen Patentanspruchs eine eigene und von der Kombination sämtlicher Merkmale des unabhängigen Patentanspruchs unabhängige Erfindung bilden können, die zum Gegenstand eines unabhängigen Anspruchs oder einer Teilungsanmeldung gemacht werden kann.

Ein Aspekt der Erfindung betrifft ein Parkassistenzsystem zum Durchführen eines automatisierten Einparkmanövers eines Kraftfahrzeugs in eine Parklücke mit zumindest automatisierter Querführung entlang einer Einparktrajektorie. Es kann vorgesehen sein, dass es sich um Parkassistenzsystem mit automatisierter Querführung und automatisierter Längsführung handelt.

Dieses Parkassistenzsystem ist eingerichtet, vor Durchführung des automatisierten Einparkmanövers mittels einer Sensorik die Parklücke zu vermessen und basierend auf der Vermessung der Parklücke anhand vorbestimmter Kriterien den Parklückentyp der Parklücke aus einer Menge von erkennbaren Parklückentypen zu erkennen. Die Menge von Parklückentypen umfasst dabei einen Längsparklückentyp, in den längs eingeparkt werden kann, und einen Querparklückentyp, in den quer einparkt werden kann.

Das erfindungsgemäße Parkassistenzsystem kennzeichnet sich dadurch, dass die Menge von erkennbaren Parklückentypen darüber hinaus einen Universalparklückentyp umfasst, in den sowohl längs als auch quer einparkt werden kann. Das Parkassistenzsystem ist eingerichtet ist, für den Fall, dass die Parklücke als Universalparklückentyp erkannt wurde, eine Auswahlmöglichkeit für den Fahrer zu geben eine Einparkrichtung auszuwählen, nämlich ob das Parkassistenzsystem längs oder quer in die Parklücke einparken soll. Es wird hierzu ein Auswahlmenü mit den Optionen Längseinparken und Quereinparken dem Fahrer auf einem Bildschirm dargestellt, wobei das System eine Fahrereingabe (beispielsweise über ein zentrales multifunktionales Bedienelement) zur Auswahl einer der beiden Optionen entgegennehmen kann. Es wäre aber auch denkbar, dass der Fahrer akustisch und/oder optisch vom System zur Auswahl einer der beiden Optionen Längseinparken und Quereinparken aufgerufen wird, und der Fahrer per Spracheingabe eine der beiden Optionen auswählt.

Die Auswahlmöglichkeit wird dem Fahrer aber vorzugsweise erst nach Erreichen des Fahrzeugstillstands gegeben.

Das Parkassistenzsystem ist eingerichtet, entsprechend der Auswahl des Fahrers längs bzw. quer in die Parklücke automatisiert einzuparken, wobei die Einparktrajektorie von der Auswahl des Fahrers abhängt. Es wird beispielsweise längs in die Parklücke entlang einer Längsparktrajektorie einparkt, wenn das Parkassistenz feststellt, dass der Fahrer ein Längsparken ausgewählt hat, und beispielsweise quer in die Parklücke entlang einer Querparktrajektorie eingeparkt, wenn das Parkassistenz feststellt, dass der Fahrer ein Querparken ausgewählt hat.

Bei dem erfindungsgemäßen Parkassistenzsystem kann der Fahrer also bei Universalparklücken, in die sowohl längs als auch quer einparkt werden kann, die Einparkrichtung vor Beginn des Manövers auswählen, so dass das System entsprechend der gewünschten Einparkrichtung in die Parklücke einparkt. Ein vom Fahrer unerwünschtes Längseinparken in sehr breite Querparklücken oder ein unerwünschtes Querparken in sehr tiefe Längsparklücken kann damit ausgeschlossen werden. Das Parkassistenzsystem verhält sich damit auch in derartigen Sondersituationen wie vom Fahrer gewünscht.

Vorzugsweise ist das Parkassistenzsystem eingerichtet, basierend auf der Vermessung der Parklücke anhand vorbestimmter Kriterien den Parklückentyp zu erkennen. Der Universalparklückentyp wird anhand des Vorliegens zumindest zweier kumulativer Kriterien erkannt, nämlich anhand des Vorliegens eines Längenkriteriums, welches eine ausreichende Länge der Parklücke zum Längsparken anzeigt, und anhand des Vorliegens eines Tiefenkriteriums, welches eine ausreichende Tiefe der Parklücke zum Querparken anzeigt. Wenn das Längenkriterium und das Tiefenkriterium (und - falls vorhanden - noch ein oder mehrere weitere kumulative Kriterien) erfüllt sind), wird die Parklücke als Universalparklückentyp klassifiziert.

Das Tiefenkriterium ist beispielsweise, dass im Rahmen der Vermessung der Parklücke in der Parklücke quer zur Fahrbahn in der Reichweite der Sensorik kein die Tiefe der Parklücke begrenzendes Objekt detektiert wird. Beispielsweise handelt es sich bei der Sensorik beispielsweise um eine Ultraschallsensorik mit einer Reichweite von x Meter quer zur Fahrbahn. Das Tiefenkriterium wäre dann erfüllt, wenn in der Parklücke innerhalb der Reichweite der Sensorik von x Metern quer zur Fahrbahn kein Objekt detektiert wird.

Insbesondere bei Verwendung einer Sensorik mit höheren Reichweite quer zur Fahrbahn, mit der die tatsächliche Tiefe der Parklücke quer zur Fahrbahn gemessen könnte, kann das Tiefenkriterium darin besteht, dass die gemessene Tiefe der Parklücke (z. B. 5,1 m) quer zur Fahrbahn größer als ein Tiefenschwellwert ist. Der Tiefenschwellwert entspricht dabei vorzugsweise der eigenen Fahrzeuglänge oder der eigenen Fahrzeuglänge zuzüglich einer zusätzlichen Länge im Bereich größer 0 m und kleiner 1,0 m (z. B. ungefähr 0,2 m).

Zum Feststellen des Universalparktyps wird neben dem Erfüllen des Tiefenkriteriums ferner das Erfüllen eines Längenkriteriums festgestellt. Bei dem Längenkriterium handelt es sich beispielsweise um die Voraussetzung, dass die gemessene Länge der Parklücke in Richtung der Fahrbahn größer oder größer gleich als ein bestimmter Längenschwellwert ist. Der Längenschwellwert entspricht beispielsweise der eigenen Fahrzeuglänge zuzüglich einer zusätzlichen Länge im Bereich von 0,4 m bis 1,6 m (z. B. ungefähr 0,8 m).

Für den Universalparklückentyp kann eine bevorzugte Einparkrichtung (längs oder quer) im Sinne einer Standard- oder Default-Einparkrichtung voreingestellt sein, so dass die bevorzugte Parkrichtung dann beispielsweise automatisch ausgewählt wird. Beispielsweise ist die voreingestellte bevorzugte Einparkrichtung bei einem Universalparklückentyp ein Längsparken. Die voreingestellte bevorzugte Einparkrichtung hat beispielsweise die Wirkung, dass wenn eine Parklücke als Universalparklückentyp erkannt wurde, ein Einparken in der voreingestellten Einparkrichtung mit weniger Bedienschritten (insbesondere ohne einen Bedienschritt) ausgelöst werden kann als ein Einparken in die andere Einparkrichtung, wodurch der Bedienkomfort für den Fahrer im Fall des Befahrens der Universalparklücke in der voreingestellten Einparkrichtung erhöht wird. Beispielsweise wird die voreingestellte Einparkrichtung in einem vor Durchführen des Parkmanövers angezeigten Auswahlmenu zur Auswahl der Einparkrichtung in dem Auswahlmenu hervorgehoben. Zur Wahl der anderen Einparkrichtung muss der Fahrer eine oder mehrere bestimmte Bedienhandlungen vornehmen, beispielsweise ein zentrales multifunktionales Bedienelement in eine bestimmte Richtung schieben oder ziehen, damit die andere Einparkrichtung hervorgehoben wird, und anschließend das Bedienelement drücken. Eine oder sämtliche dieser Bedienhandlungen sind beispielsweise zur Wahl der voreingestellten Einparkrichtung dann nicht nötig.

Es ist denkbar, dass bei keiner expliziten Auswahl des Fahrers die voreingestellte Parkrichtung Längsparken bzw. Querparken vom System automatisch gewählt wird, und entsprechend dieser automatischen Wahl längs bzw. quer in die Parklücke vom System eingeparkt wird.

Für den Universalparklückentyp kann die bevorzugte Einparkrichtung vorzugsweise vom Fahrer selbst voreingestellt werden. Eine werkseitig voreingestellte Einparkrichtung kann vom Fahrer beispielsweise in eine veränderte voreingestellte Einparkrichtung verändert werden und dann als voreingestellte Einparkrichtung gespeichert werden. Für verschiedene Fahrer eines Kraftfahrzeugs können vorzugsweise auch verschiedene bevorzugte Einparkrichtungen von dem jeweiligen Fahrer voreingestellt werden, die dann abgespeichert werden, beispielsweise im Fahrzeug, im Fahrzeugschlüssel des jeweiligen Fahrers oder auf einem Backend-Server.

Die voreingestellte bevorzugte Einparkrichtung kann von dem Land oder der Länderregion, für das bzw. die das Fahrzeug vorgesehen ist, abhängen. Sofern in dem Land bzw. der Länderregion das Längseinparken vorherrscht, wird beispielsweise das Längsparken voreingestellt, wohingegen bei einem Land bzw. einer Länderregion, bei dem bzw. der das Querparken vorherrscht, beispielsweise das Querparken voreingestellt wird.

Es ist auch denkbar, dass die voreingestellte bevorzugte Einparkrichtung ortsabhängig ist, d. h. an zumindest zwei unterschiedlichen Orten sind unterschiedliche bevorzugte Einparkrichtungen voreingestellt. Hierfür sind vorzugsweise Mittel zur Ortsbestimmung vorhanden, beispielsweise ein satellitengestütztes Navigationssystem. Beispielsweise ist für zwei unterschiedliche Länder (z. B. Deutschland und Japan) die bevorzugte Einparkrichtung unterschiedlich voreingestellt (z. B. für Deutschland Längseinparken und für Japan Quereinparken). Wenn von den Mitteln zur Ortsbestimmung festgestellt wird, dass sich das Fahrzeug in einem ersten Land (z. B. Deutschland) aufhält, liegt eine erste voreingestellte Einparkrichtung (z. B. Längsparken) vor, während bei Feststellen, dass sich das Fahrzeug in einem zweiten Land (z. B. Japan) aufhält, eine andere voreingestellte Einparkrichtung (z. B. Querparken) vorliegt. Die Voreinstellung der bevorzugten Einparkrichtung kann natürlich auch für verschiedene Parkplätze innerhalb einer Stadt unterschiedlich sein. Die Auflösung der Voreinstellung kann beispielsweise auf einzelne Parkbereiche mit mehreren Parkplätzen oder gar auf einzelne Parklücken bezogen sein. Vorzugsweise ist zum Einparken an einer bestimmten Ortsposition eine positionsbezogene voreingestellte Einparkrichtung abgespeichert. Hierbei ist es von Vorteil, wenn die positionsbezogene voreingestellte Einparkrichtung von mindestens einer früheren Auswahl des Fahrers bezüglich der Einparkrichtung bei einer Universalparklücke an dieser Position abhängig ist. Wenn der Fahrer an einer bestimmten Position (z. B. an einem bestimmten Parkplatz) in der Vergangenheit je nach Ausgestaltung ein oder mehrmals die gleiche Einparkrichtung gewählt hat, wird diese gewählte Einparkrichtung zur voreingestellten bevorzugten Einparkrichtung bei erneutem Parken an dieser Position. Es wird also die Einparkrichtungs-Historie mit einbezogen.

Generell ist es denkbar, dass die voreingestellte Einparkrichtung von mindestens einer früheren Auswahl des Fahrers bezüglich der Einparkrichtung bei einer Universalparklücke abhängig ist. Dies muss nicht positionsabhängig sein. Wenn der Fahrer beispielsweise je nach Ausgestaltung ein oder mehrmals bei einer Universalparklücke eine bestimmte Einparkrichtung gewählt, wird diese Einparkrichtung als bevorzugte Einparkrichtung voreingestellt.

Ein zweiter Aspekt der Erfindung betrifft ein Verfahren zum Durchführen eines automatisierten Einparkmanövers eines Kraftfahrzeugs in eine Parklücke mit zumindest automatisierter Querführung entlang einer Einparktrajektorie. Vor Durchführung des automatisierten Einparkmanövers wird die Parklücke mittels einer Sensorik vermessen und basierend auf der Vermessung der Parklücke wird der Parklückentyp der Parklücke aus einer Menge von erkennbaren Parklückentypen erkannt, wobei die Menge von Parklückentypen neben dem Längsparklückentyp und dem Querparklückentyp auch den vorstehend beschriebenen Universalparklückentyp umfasst. Für den Fall, dass die Parklücke als Universalparklückentyp erkannt wurde, wird eine Auswahlmöglichkeit für den Fahrer gegeben, eine Einparkrichtung auszuwählen, nämlich ob das Parkassistenzsystem längs oder quer in die Parklücke einparken soll. Entsprechend der Auswahl des Fahrers wird dann längs bzw. quer in die Parklücke automatisiert eingeparkt.

Die vorstehenden Ausführungen zum erfindungsgemäßen Parkassistenzsystem nach dem zuerst beschriebenen Aspekt der Erfindung gelten in entsprechender Weise auch für das erfindungsgemäße Verfahren nach dem zweiten Aspekt der Erfindung. An dieser Stelle nicht explizit beschriebene vorteilhafte Ausführungsbeispiele des erfindungsgemäßen Verfahrens entsprechen den vorstehend oder in den Patentansprüchen beschriebenen vorteilhaften Ausführungsbeispielen des erfindungsgemäßen Parkassistenzsystems.

Die Erfindung wird nachfolgend unter Zuhilfenahme auf die beigefügten Zeichnungen anhand eines Ausführungsbeispiels beschrieben. In diesen zeigen:
- Fig. 1: die Funktionsweise eines Ausführungsbeispiels für ein erfindungsgemäßes Parkassistenzsystem mit automatisierter Querführung;
- Fig. 2: ein automatisiertes Einparkmanöver eines Kraftwagens 1 in eine beispielhafte, auf der rechten Fahrbahnseite gelegenen Parklücke 2 vom Universalparklückentyp;
- Fig. 3: ein beispielhaftes auf einem Bildschirm 20 dargestelltes Piktogramm für einen Universalparklückentyp; und
- Fig. 4: ein beispielhaftes Auswahlmenu mit den Optionen Längsparken und Querparken.

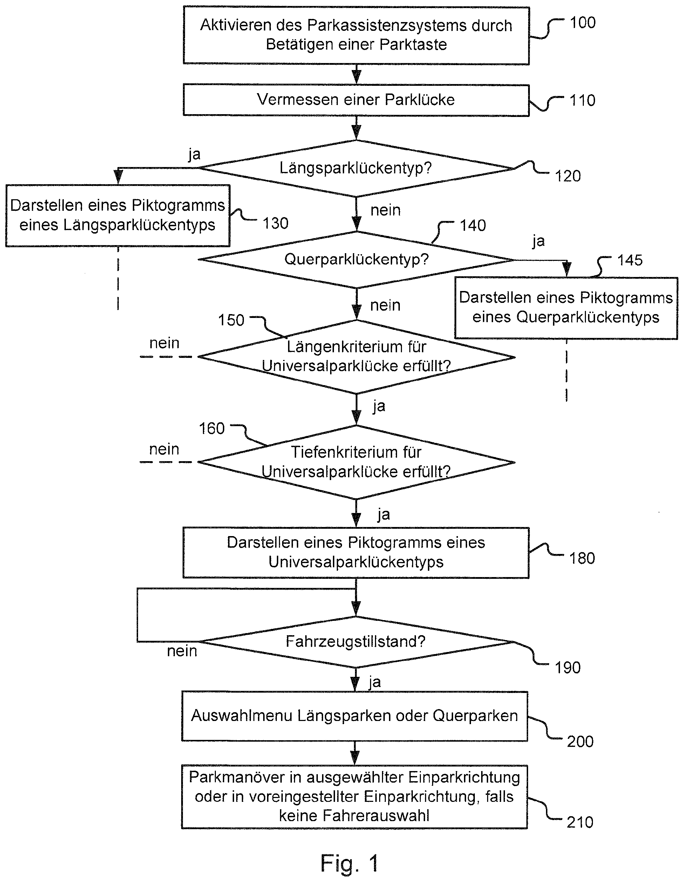

Fig. 1 zeigt in vereinfachter Weise die Funktionsweise eines Ausführungsbeispiels für ein erfindungsgemäßes Parkassistenzsystem mit automatisierter Querführung. In Schritt 100 wird das Parkassistenzsystem durch Betätigen einer Parktaste seitens des Fahrers aktiviert. Nach Einschalten des Parkassistenzsystems wird der aktuelle Status der Parklückensuche in einem Bildschirm der Instrumentenkombination im Fahrzeugcockpit dargestellt. In Schritt 110 wird eine Parklücke mittels einer Ultraschallsensorik beim Vorbeifahren an der Parklücke vermessen.

In der Abfrage 120 wird geprüft, ob es sich bei der vermessenen Parklücke um eine Parklücke vom Längsparklückentyp handelt. Es wird beispielsweise die Parklücke als Längsparklückentyp klassifiziert, wenn die Parklücke eine Mindestlänge zwischen zwei Objekten aufweist, die der eigenen Fahrzeuglänge plus ca. 0,8 m entspricht und eine gemessene Tiefe quer zur Fahrbahn von mindestens ca. 1,6 m aufweist, wobei im Unterschied zu Universalparklücke innerhalb der Reichweite der Sensorik (z. B. ca. 4m) in der Parklücke noch mindestens ein die Tiefe begrenzende Objekt detektiert wird. Sofern die Parklücke als Längsparklückentyp in der Abfrage 120 erkannt wurde, wird in Schritt 130 ein Piktogramm einer Längsparklücke auf dem Bildschirm dargestellt. Ein Piktogramm wird dargestellt, solange das Fahrzeug den Bereich noch nicht verlassen hat, aus dem die Parklücke rückwärts beparkt werden kann.

Sofern in der Abfrage 120 kein Längsparklückentyp erkannt wurde, wird in der Abfrage 140 geprüft, ob es sich bei der vermessenen Parklücke um einen Querparklückentyp handelt. Es wird beispielsweise die Parklücke als Querparklückentyp klassifiziert, wenn die Parklücke eine Breite zwischen zwei Objekten aufweist, die der eigenen Fahrzeugbreite plus ca. 0,7 m bis maximal beispielsweise 2,8 m entspricht und im Rahmen der Vermessung der Parklücke in der Parklücke quer zur Fahrbahn in der Reichweite der Sensorik (ca. 4 m) kein Objekt detektiert wird. Sofern die Parklücke als Querparklückentyp in der Abfrage 140 erkannt wurde, wird in Schritt 145 ein Piktogramm einer erkannten Querparklücke auf dem Bildschirm dargestellt. Sofern in der Abfrage 140 kein Querparklückentyp erkannt wurde, wird geprüft, ob es sich um einen Universalparklückentyp handelt. Hierzu wird in der Abfrage 150 geprüft, ob ein Längenkriterium für eine Universalparklücke erfüllt ist, welches eine ausreichende Länge der Parklücke zum Längsparken anzeigt. Beispielsweise wird geprüft, ob die gemessene Länge der Parklücke zwischen zwei Objekten in Richtung der Fahrbahn größer gleich der eigenen Fahrzeuglänge zuzüglich ca. 0,8 m ist. Wenn das Längenkriterium für einen Universalparklückentyp erfüllt ist, wird in der Abfrage 160 geprüft, ob ein Tiefenkriterium erfüllt ist, welches eine ausreichende Tiefe der Parklücke zum Querparken anzeigt. Das Tiefenkriterium ist beispielsweise erfüllt, wenn im Rahmen der Vermessung der Parklücke in der Parklücke quer zur Fahrbahn in der Reichweite der Sensorik (ca. 4 m) kein Objekt detektiert wird. In diesem Beispiel handelt es sich bei dem Universalparklückentyp also quasi um einen Längsparklückentyp, bei dem im Unterschied zum Längsparklückentyp in der Tiefe der Parklücke kein die Tiefe begrenzendes Objekt detektiert wird.

Wenn das Tiefenkriterium und das Längenkriterium erfüllt sind, wird die Parklücke als Universalparklücke klassifiziert, und in Schritt 180 ein Piktogramm eines Universalparklückentyps auf dem Bildschirm dargestellt.

In der Abfrage 190 wird geprüft, ob sich das Fahrzeug bereits im Fahrzeugstillstand befindet. Wenn ein Fahrzeugstillstand vorliegt, wird in Schritt 200 ein Auswahlmenu mit den beiden Optionen Längseinparken und Quereinparken dem Fahrer auf dem Bildschirm dargestellt. Bei einer Universalparklücke gibt es im System eine voreingestellte bevorzugte Einparkrichtung; diese wird im Auswahlmenu markiert und damit vorgewählt. Durch Schieben oder Ziehen eines zentralen Bedienelements kann der Fahrer die markierte Einparkrichtung im Auswahlmenu wechseln und durch Druck auf das zentrale Bedienelement die markierte Einparkrichtung auswählen.

Nach Auswahl einer Einparkrichtung erfolgt bei Rückwärtsfahrt ein automatisiertes Einparkmanöver in der gewählten Einparkrichtung (s. Schritt 210). Sofern der Fahrer keine Einparkrichtung durch Druck auf das zentrale Bedienelement auswählt, wird bei Rückwärtsfahrt ein automatisiertes Einparkmanöver in die voreingestellte Einparkrichtung ausgelöst.

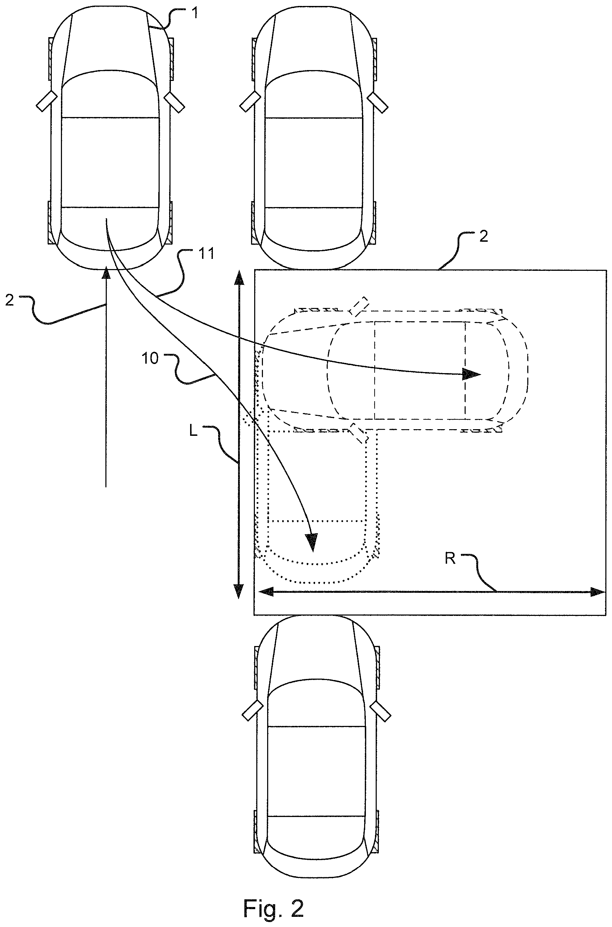

In Fig. 2 ist ein automatisiertes Einparkmanöver eines Kraftwagens 1 in eine beispielhafte, auf der rechten Fahrbahnseite gelegenen Parklücke 2 vom Universalparklückentyp in der Draufsicht dargestellt. Die Richtung der Fahrbahn entspricht dem Pfeil 3. Die Parklücke 2 erfüllt das in Fig.1 beschriebene beispielhafte Längenkriterium, welches eine ausreichende Länge L der Parklücke zum Längsparken voraussetzt. Die Länge L der Parklücke ist beispielsweise länger als die eigene Fahrzeuglänge plus ca. 0,8 m. Ferner erfüllt die Parklücke 2 das in Fig.1 beschriebene beispielhafte Tiefenkriterium, nämlich dass im Rahmen der Vermessung der Parklücke 2 in der Parklücke 2 quer zur Fahrbahn in der Reichweite R der Ultraschallsensorik kein Objekt detektiert wird.

Je nach Auswahl des Fahrers im Auswahlmenu wird dann gemäß einer beispielhaften ersten Einparktrajektorie 10 rückwärts längs in die Parklücke 2 eingeparkt oder gemäß einer beispielhaften zweiten Einparktrajektorie 11 rückwärts quer in die Parklücke 2 einparkt. Die Parkendpositionen nach dem Längseinparken und dem Quereinparken sind in Fig. 2 punktiert bzw. gestrichelt dargestellt.

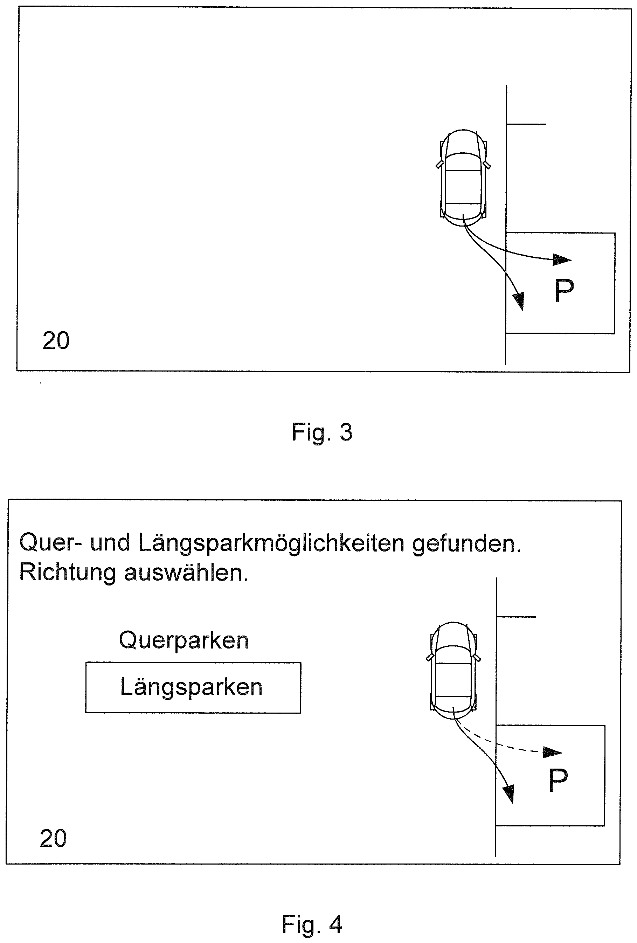

In Fig. 3 in ein beispielhaftes auf einem Bildschirm 20 dargestelltes Piktogramm für einen Universalparklückentyp gezeigt, das nach Erkennen einer Parklücke vom Universalparklückentyp gemäß Schritt 180 in Fig. 1 auf dem Bildschirm 20 dargestellt wird.

In Fig. 4 ist ein beispielhaftes Auswahlmenu mit den Optionen Längsparken und Querparken gemäß Schritt 200 in Fig. 1 gezeigt, welches auf dem Bildschirm 20 dargestellt wird. Die bevorzugte Einparkrichtung (hier Längsparken) ist bei Beginn der Darstellung des Menus vorgewählt und entsprechend hervorgehoben (s. die Markierung um "Längsparken"). Durch Schieben oder Ziehen eines zentralen Bedienelements kann der Fahrer die hervorgehobene Einparkrichtung im Auswahlmenu wechseln und durch Druck auf das zentrale Bedienelement die aktuell hervorgehobene Einparkrichtung auswählen. Die hervorgehobene Einparkrichtung wird in dem Piktogramm kenntlich gemacht (beispielsweise ist die jeweils hervorgehobene Einparkrichtung durchgezogen dargestellt und die andere Einparkrichtung gestrichelt oder punktiert oder überhaupt nicht dargestellt).

## Patentansprüche

1. Parkassistenzsystem zum Durchführen eines automatisierten Einparkmanövers eines Kraftfahrzeugs (1) in eine Parklücke (2) mit zumindest automatisierter Querführung entlang einer Einparktrajektorie (10, 11), welches eingerichtet ist,
- vor Durchführung des automatisierten Einparkmanövers mittels einer Sensorik die Parklücke (2) zu vermessen,
- basierend auf der Vermessung der Parklücke (2) den Parklückentyp der Parklücke aus einer Menge von erkennbaren verschiedenen Parklückentypen zu erkennen, wobei die Menge von Parklückentypen umfasst:
- einen Längsparklückentyp, in den längs eingeparkt werden kann, und
- einen Querparklückentyp, in den quer einparkt werden kann,
wobei
- die Menge von erkennbaren Parklückentypen darüber hinaus einen Universalparklückentyp umfasst, in den sowohl längs als auch quer einparkt werden kann,
- wobei das Parkassistenzsystem eingerichtet ist,
- für den Fall, dass die Parklücke als Universalparklückentyp erkannt wurde, eine Auswahlmöglichkeit für den Fahrer zu geben, eine Einparkrichtung auszuwählen, nämlich ob das Parkassistenzsystem längs oder quer in die Parklücke einparken soll, und hierzu ein Auswahlmenü mit den Optionen Längseinparken und Quereinparken dem Fahrer auf einem Bildschirm dazustellen, und eine Fahrereingabe zur Auswahl einer der beiden Optionen entgegenzunehmen, und
- entsprechend der Auswahl des Fahrers längs bzw. quer in die Parklücke automatisiert einzuparken.

2. Parkassistenzsystem nach Anspruch 1, wobei das Parkassistenzsystem eingerichtet ist, anhand vorbestimmter kumulativer Kriterien den Universalparklückentyp zu erkennen und die kumulativen Kriterien zum Erkennen des Universalparklückentyps ein Längenkriterium, welches eine ausreichende Länge (L) der Parklücke (2) zum Längsparken anzeigt, und ein Tiefenkriterium, welches eine ausreichende Tiefe der Parklücke zum Querparken anzeigt, umfassen.

3. Parkassistenzsystem nach Anspruch 2, wobei
- das Tiefenkriterium ist, dass im Rahmen der Vermessung der Parklücke in der Parklücke (2) quer zur Fahrbahn in der Reichweite (R) der Sensorik kein Objekt detektiert wird, oder
- das Tiefenkriterium ist, dass eine gemessene Tiefe der Parklücke quer zur Fahrbahn größer oder größer gleich als ein Tiefenschwellwert ist, wobei der Tiefenschwellwert insbesondere der eigenen Fahrzeuglänge oder der eigenen Fahrzeuglänge zuzüglich einer zusätzlichen Länge im Bereich größer 0 m und kleiner 1,0 m entspricht.

4. Parkassistenzsystem nach einem der Ansprüche 2 oder 3, wobei das Längenkriterium ist, dass eine gemessene Länge der Parklücke (2) in Richtung der Fahrbahn größer oder größer gleich als ein bestimmter Längenschwellwert ist, wobei der Längenschwellwert insbesondere der eigenen Fahrzeuglänge zuzüglich einer zusätzlichen Länge im Bereich von 0 m bis 1,6 m entspricht.

5. Parkassistenzsystem nach einem der vorhergehenden Ansprüche, wobei für alle Parklücken vom Universalparklückentyp eine gleiche bevorzugte Einparkrichtung voreingestellt ist.

6. Parkassistenzsystem nach Anspruch 5, wobei für den Fall, dass die Parklücke als Universalparklückentyp erkannt wurde, ein Einparken in der voreingestellten Einparkrichtung mit weniger Bedienschritten ausgelöst werden kann als ein Einparken in die andere Einparkrichtung.

7. Parkassistenzsystem nach einem der Ansprüche 5 bis 6, wobei das Parkassistenzsystem eingerichtet ist, für den Fall, dass die Parklücke (2) als Universalparklückentyp erkannt wurde, ein Auswahlmenu mit den Optionen Längseinparken und Quereinparken dem Fahrer auf einem Bildschirm darzustellen, und eine Fahrereingabe zur Auswahl einer der beiden Optionen entgegenzunehmen, wobei die voreingestellte Einparkrichtung in dem Auswahlmenu vorgewählt ist und diese Vorauswahl insbesondere durch Betätigung eines Bedienelements bestätigbar ist.

8. Parkassistenzsystem nach einem der Ansprüche 5 bis 7, wobei das Parkassistenzsystem eingerichtet ist,
- bei keiner expliziten Auswahl des Fahrers die voreingestellte Parkrichtung Längsparken bzw. Querparken vom System automatisch zu wählen und
- entsprechend dieser automatischen Wahl längs bzw. quer in die Parklücke einzuparken.

9. Parkassistenzsystem nach einem der Anspruch 5 bis 8, wobei das Parkassistenzsystem eingerichtet ist, dass für den Universalparklückentyp die bevorzugte Einparkrichtung vorzugsweise vom Fahrer selbst voreinstellbar ist.

10. Parkassistenzsystem nach einem der Ansprüche 5 bis 9, wobei die voreingestellte Einparkrichtung ortsabhängig ist, insbesondere landesabhängig ist.

11. Parkassistenzsystem nach Anspruch 10, wobei zum Einparken an einer bestimmten Ortsposition eine positionsbezogene voreingestellte Einparkrichtung abgespeichert ist, und die positionsbezogene voreingestellte Einparkrichtung von mindestens einer früheren Auswahl des Fahrers bezüglich der Einparkrichtung bei einer Universalparklücke an dieser Position abhängig ist.

12. Parkassistenzsystem nach einem der Ansprüche 5 bis 11, wobei die voreingestellte Einparkrichtung von mindestens einer früheren Auswahl des Fahrers bezüglich der Einparkrichtung bei einer Universalparklücke abhängig ist.

13. Parkassistenzsystem nach einem der vorhergehenden Ansprüche, wobei das Parkassistenzsystem eingerichtet ist, die Auswahlmöglichkeit erst nach Erreichen des Fahrzeugstillstands zu geben.

14. Parkassistenzsystem nach einem der vorhergehenden Ansprüche, wobei das Parkassistenzsystem eingerichtet ist,
- für den Fall, dass die Parklücke als Universalparklückentyp erkannt wurde, ein Piktogramm für einen Universalparklückentyp dem Fahrer auf einem Bildschirm darzustellen,
- für den Fall, dass die Parklücke als Längsparklückentyp erkannt wurde, ein Piktogramm für einen Längsparklückentyp dem Fahrer auf einem Bildschirm darzustellen, und
- für den Fall, dass die Parklücke als Querparklückentyp erkannt wurde, ein Piktogramm für einen Querparklückentyp dem Fahrer auf einem Bildschirm darzustellen.

15. Verfahren zum Durchführen eines automatisierten Einparkmanövers eines Kraftfahrzeugs (1) in eine Parklücke (2) mit zumindest automatisierter Querführung entlang einer Einparktrajektorie (10, 11), wobei
- vor Durchführung des automatisierten Einparkmanövers mittels einer Sensorik die Parklücke (2) vermessen wird,
- basierend auf der Vermessung der Parklücke (2) der Parklückentyp der Parklücke (2) aus einer Menge von erkennbaren Parklückentypen erkannt wird, wobei die Menge von Parklückentypen umfasst:
- einen Längsparklückentyp, in den längs eingeparkt werden kann, und
- einen Querparklückentyp, in den quer einparkt werden kann,
- die Menge von erkennbaren Parklückentypen darüber hinaus einen Universalparklückentyp umfasst, in den sowohl längs als auch quer einparkt werden kann, und
- wobei
- für den Fall, dass die Parklücke (2) als Universalparklückentyp erkannt wurde, eine Auswahlmöglichkeit für den Fahrer gegeben wird, eine Einparkrichtung auszuwählen, nämlich ob das Parkassistenzsystem längs oder quer in die Parklücke einparken soll, und hierzu ein Auswahlmenü mit den Optionen Längseinparken und Quereinparken dem Fahrer auf einem Bildschirm dargestellt wird, und eine Fahrereingabe zur Auswahl einer der beiden Optionen entgegen genommen wird, und
- entsprechend der Auswahl des Fahrers längs bzw. quer in die Parklücke automatisiert eingeparkt wird.

## Claims

1. Parking assistance system for performing an automated parking manoeuvre of a motor vehicle (1) into a parking space (2) with at least automated transverse guidance along a parking trajectory (10, 11), which is designed
- to measure the parking space (2) by means of a sensor before performing the automated parking manoeuvre,
- on the basis of the measurement of the parking space (2) to recognize the parking space type of the parking space from a set of recognizable, different parking space types, wherein the set of parking space types comprises:
- a longitudinal parking space type in which it is possible to park longitudinally, and
- a transverse parking space type, in which it is possible to park transversely,
wherein
- the set of recognizable parking space types moreover includes a universal parking space type, in which it is possible to park both longitudinally as well as transversely,
- wherein the parking assistance system is designed
- in the event that the parking space is recognized as being of the universal parking space type, to give a selection option to the driver to select a parking direction, namely whether the parking assistance system should park longitudinally or transversely into the parking space, and to display a selection menu with the options of longitudinal parking and transverse parking to the driver on a screen for this purpose, and to receive a driver input for the selection of one of the two options, and
- to park longitudinally or transversely into the parking space automatically according to the selection of the driver.

2. Parking assistance system according to Claim 1, wherein the parking assistance system is designed to recognize the universal parking space type with reference to predetermined, cumulative criteria, and the cumulative criteria for the recognition of the universal parking space type comprise a length criterion which indicates an adequate length (L) of the parking space (2) for longitudinal parking, and a depth criterion, which indicates an adequate depth of the parking space for transverse parking.

3. Parking assistance system according to Claim 2, wherein
- the depth criterion is that in the course of the measurement of the parking space no object is detected in the parking space (2) transverse to the roadway within the range (R) of the sensor, or
- the depth criterion is that a measured depth of the parking space transverse to the roadway is greater than or is greater than or equal to a depth threshold value, wherein the depth threshold value corresponds in particular to the length of the vehicle itself or the length of the vehicle itself plus an additional length in the range greater than 0 m and smaller than 1.0 m.

4. Parking assistance system according to either of Claims 2 and 3, wherein the length criterion is that a measured length of the parking space (2) in the direction of the roadway is greater than or is greater than or equal to a specific length threshold value, wherein the length threshold value corresponds in particular to the length of the vehicle itself plus an additional length in the range from 0 m to 1.6 m.

5. Parking assistance system according to one of the preceding claims, wherein the same preferred parking direction is preset for all parking spaces of the universal parking space type.

6. Parking assistance system according to Claim 5, wherein, for the case in which the parking space is recognized as being of the universal parking space type, parking in the preset parking direction can be initiated with fewer operating steps than parking in the other parking direction.

7. Parking assistance system according to either of Claims 5 and 6, wherein the parking assistance system is designed, in the case in which the parking space (2) is recognized as being of the universal parking space type, to display a selection menu with the options of longitudinal parking and transverse parking to the driver on a screen, and to receive a driver input for selecting one of the two options, wherein the preset parking direction is preselected in the selection menu, and this preselection can be confirmed in particular through actuation of an operating element.

8. Parking assistance system according to one of Claims 5 to 7, wherein the parking assistance system is designed
- in the absence of an explicit selection of the driver, for the system automatically to select the preset parking direction of longitudinal parking or transverse parking, and
- to park longitudinally or transversely into the parking space in accordance with this automatic selection.

9. Parking assistance system according to one of Claims 5 to 8, wherein the parking assistance system is designed such that the preferred parking direction for the universal parking space type can preferably be preset by the driver themself.

10. Parking assistance system according to one of Claims 5 to 9, wherein the preset parking direction is dependent on the location, in particular is dependent on the country.

11. Parking assistance system according to Claim 10, wherein a position-related preset parking direction is stored for parking at a specific local position, and the position-related preset parking direction depends on at least one previous selection by the driver relating to the parking direction at a universal parking space at this position.

12. Parking assistance system according to one of Claims 5 to 11, wherein the preset parking direction depends on at least one earlier selection by the driver in relation to the parking direction at a universal parking space.

13. Parking assistance system according to one of the preceding claims, wherein the parking assistance system is designed only to provide the selection option after the vehicle has become stationary.

14. Parking assistance system according to one of the preceding claims, wherein the parking assistance system is designed
- in the case in which the parking space is recognized as being of the universal parking space type, to display a pictogram for a universal parking space type to the driver on a screen,
- in the case in which the parking space is recognized as being of the longitudinal parking space type, to display a pictogram for a longitudinal parking space type to the driver on a screen, and
- in the case in which the parking space is recognized as being of the transverse parking space type, to display a pictogram for a transverse parking space type to the driver on a screen.

15. Method for performing an automated parking manoeuvre of a motor vehicle (1) into a parking space (2) with at least automated transverse guidance along a parking trajectory (10, 11), wherein
- the parking space (2) is measured by means of a sensor before performing the automated parking manoeuvre,
- on the basis of the measurement of the parking space (2), the parking space type of the parking space (2) is recognized from a set of recognizable parking space types, wherein the set of parking space types comprises:
- a longitudinal parking space type, in which it is possible to park longitudinally, and
- a transverse parking space type, in which it is possible to park transversely,
- the set of recognizable parking space types moreover comprises a universal parking space type, in which it is possible to park both longitudinally as well as transversely, and
- wherein
- for the case in which the parking space (2) is recognized as being of the universal parking space type, a selection option is given for the driver to select a parking direction, namely whether the parking assistance system should park longitudinally or transversely into the parking space, and to display a selection menu with the options of longitudinal parking and transverse parking to the driver on a screen for this purpose, and to receive a driver input for the selection of one of the two options, and
- automated parking takes place longitudinally or transversely into the parking space according to the selection of the driver.

## Revendications

1. Système d'aide au stationnement permettant d'effectuer une manœuvre de stationnement automatisée d'un véhicule automobile (1) dans une place de stationnement (2) par au moins un guidage transversal automatisé sur une trajectoire de stationnement (10, 11), qui est aménagé pour,
- mesurer la place de stationnement (2) au moyen d'un système de capteurs avant l'exécution de la manœuvre de stationnement automatisée,
- sur la base du mesurage de la place de stationnement (2), reconnaître le type de place de stationnement de la place de stationnement parmi une quantité de différents types de place de stationnement reconnaissables, la quantité de types de place de stationnement comprenant :
- un type de place de stationnement longitudinale qui permet de stationner longitudinalement, et
- un type de place de stationnement transversale qui permet de stationner transversalement,
dans lequel
- la quantité de types de place de stationnement reconnaissables comprend en outre un type de place de stationnement universelle qui permet de stationner aussi bien longitudinalement que transversalement,
- le système d'aide au stationnement étant aménagé pour
- si la place de stationnement a été reconnue comme étant un type de place de stationnement universelle, offrir au conducteur une possibilité de sélectionner une direction de stationnement, notamment de sélectionner si le système d'aide au stationnement doit procéder à un stationnement longitudinal ou transversal sur la place de stationnement, et à cet effet, représenter pour le conducteur sur un écran un menu de sélection avec les options stationnement longitudinal et stationnement transversal, et recevoir une entrée de conducteur pour sélectionner l'une des deux options, et
- selon la sélection du conducteur, procéder au stationnement longitudinal ou transversal automatique sur la place de stationnement.

2. Système d'aide au stationnement selon la revendication 1, dans lequel le système d'aide au stationnement est aménagé pour reconnaître le type de place de stationnement universelle à l'aide de critères cumulés prédéterminés, et les critères cumulés pour reconnaître le type de place de stationnement universelle comprennent un critère de longueur qui indique une longueur suffisante (L) de la place de stationnement (2) pour le stationnement longitudinal, et un critère de profondeur qui indique une profondeur suffisante de la place de stationnement pour le stationnement transversal.

3. Système d'aide au stationnement selon la revendication 2, dans lequel
- le critère de profondeur est que dans le cadre du mesurage de la place de stationnement, aucun objet ne soit détecté transversalement à la chaussée à la portée (R) du système de capteurs dans la place de stationnement (2), ou
- le critère de profondeur est qu'une profondeur mesurée de la place de stationnement est supérieure ou supérieure ou égale à une valeur seuil de profondeur transversalement à la chaussée, la valeur seuil de profondeur correspondant en particulier à la longueur du véhicule lui-même ou à la longueur du véhicule lui-même plus une longueur supplémentaire dans la plage supérieure à 0 m et inférieure à 1,0 m.

4. Système d'aide au stationnement selon l'une quelconque des revendications 2 et 3, dans lequel le critère de longueur est qu'une longueur mesurée de la place de stationnement (2) est supérieure ou supérieure ou égale à une certaine valeur seuil longitudinale dans la direction de la chaussée, la valeur seuil longitudinale correspondant en particulier à la longueur du véhicule lui-même plus une longueur supplémentaire dans la plage de 0 m à 1,6 m.

5. Système d'aide au stationnement selon l'une quelconque des revendications précédentes, dans lequel une direction de stationnement préférée identique est préréglée pour toutes les places de stationnement du type de place de stationnement universelle.

6. Système d'aide au stationnement selon la revendication 5, dans lequel, si la place de stationnement a été reconnue comme étant un type de place de stationnement universelle, un stationnement dans la direction de stationnement préréglée peut être déclenché avec moins d'opérations qu'un stationnement dans l'autre direction de stationnement.

7. Système d'aide au stationnement selon l'une quelconque des revendications 5 à 6, dans lequel le système d'aide au stationnement est aménagé, si la place de stationnement (2) a été reconnue comme étant un type de place de stationnement universelle, pour représenter pour le conducteur un menu de sélection sur un écran avec les options stationnement longitudinal et stationnement transversal, et pour recevoir une entrée de conducteur pour sélectionner l'une des deux options, la direction de stationnement préréglée étant présélectionnée dans le menu de sélection et cette présélection peut être actionnée en particulier en actionnant un élément de commande.

8. Système d'aide au stationnement selon l'une quelconque des revendications 5 à 7, dans lequel le système d'aide au stationnement est aménagé pour
- en l'absence de sélection explicite de la part du conducteur, sélectionner automatiquement par le système la direction de stationnement préréglée stationnement longitudinal ou stationnement transversal, et
- procéder au stationnement sur la place de stationnement longitudinalement ou transversalement selon cette sélection automatique.

9. Système d'aide au stationnement selon l'une quelconque des revendications 5 à 8, dans lequel le système d'aide au stationnement est aménagé de telle sorte que pour le type de place de stationnement universelle, la direction de stationnement préférée peut être préréglée de préférence par le conducteur lui-même.

10. Système d'aide au stationnement selon l'une quelconque des revendications 5 à 9, dans lequel la direction de stationnement préréglée dépend du lieu, en particulier du pays.

11. Système d'aide au stationnement selon la revendication 10, dans lequel pour le stationnement à une certaine position locale, une direction de stationnement préréglée liée à la position est mémorisée, et la direction de stationnement préréglée liée à la position dépend d'au moins une sélection antérieure du conducteur concernant la direction de stationnement pour une place de stationnement universelle à cette position.

12. Système d'aide au stationnement selon l'une quelconque des revendications 5 à 11, dans lequel la direction de stationnement préréglée dépend d'au moins une sélection antérieure du conducteur concernant la direction de stationnement pour une place de stationnement universelle.

13. Système d'aide au stationnement selon l'une quelconque des revendications précédentes, dans lequel le système d'aide au stationnement est aménagé pour offrir la possibilité de sélection seulement lorsque le véhicule est immobilisé.

14. Système d'aide au stationnement selon l'une quelconque des revendications précédentes, dans lequel le système d'aide au stationnement est aménagé pour
- si la place de stationnement a été reconnue comme étant un type de place de stationnement universelle, représenter pour le conducteur sur un écran un pictogramme pour un type de place de stationnement universelle,
- si la place de stationnement a été reconnue comme étant un type de place de stationnement longitudinale, représenter pour le conducteur sur un écran un pictogramme pour un type de place de stationnement longitudinale, et
- si la place de stationnement a été reconnue comme étant un type de place de stationnement transversale, représenter pour le conducteur sur un écran un pictogramme d'un type de place de stationnement transversale.

15. Procédé permettant d'exécuter une manœuvre de stationnement automatisée d'un véhicule automobile (1) sur une place de stationnement (2) par au moins un guidage transversal automatisé sur une trajectoire de stationnement (10, 11), dans lequel
- la place de stationnement (2) est mesurée au moyen d'un système de capteurs avant l'exécution de la manœuvre de stationnement automatisée,
- sur la base du mesurage de la place de stationnement (2), le type de place de stationnement de la place de stationnement (2) est reconnu parmi une quantité de types de place de stationnement reconnaissables, la quantité de types de place de stationnement comprenant :
- un type de place de stationnement longitudinale qui permet de stationner longitudinalement, et
- un type de place de stationnement transversale qui permet de stationner transversalement,
- la quantité de types de place de stationnement reconnaissables comprend en outre un type de place de stationnement universelle qui permet de stationner aussi bien longitudinalement que transversalement, et
- dans lequel
- si la place de stationnement (2) a été reconnue comme étant un type de place de stationnement universelle, une possibilité de sélectionner une direction de stationnement est offerte au conducteur, notamment de sélectionner si le système d'aide au stationnement doit procéder à un stationnement longitudinal ou transversal sur la place de stationnement, et à cet effet, un menu de sélection avec les options stationnement longitudinal et stationnement transversal est représenté pour le conducteur sur un écran, et une entrée de conducteur est reçue pour sélectionner l'une des deux options, et
- le stationnement longitudinal ou transversal automatique sur la place de stationnement est effectué selon la sélection du conducteur.
